# EUROPÄISCHE PATENTANMELDUNG

(11) **EP 1 972 503 A2**
(43) Veröffentlichungstag der Anmeldung: **24.09.2008**
(21) Anmeldenummer: 08001877.3
(22) Anmeldetag: 01.02.2008
(51) Int. Cl.: B60R 13/02

(54) **Innenausstattungsteil für Fahrzeug und Herstellverfahren**

(30) Priorität: 21.03.2007 DE 102007014067
(71) Anmelder: Johnson Controls Interiors GmbH & Co. KG, 47929 Grefrath (DE)
(72) Erfinder: Claren, Lars, 40764 Langenfeld (DE); Kuckertz, Martin, 40547 Düsseldorf (DE)
(74) Vertreter: Hemmelmann, Klaus

(57) **Zusammenfassung**

Die Erfindung bezieht sich auf ein Innenausstattungsteil für ein Fahrzeug, beispielsweise eine Zierleiste für die Türinnenverkleidung eines Kraftfahrzeugs, mit einem Kunststoffträger 4 und einem optische und haptische Eigenschaften aufweisenden Verkleidungselement 5. Es ist dabei erfindungsgemäß vorgesehen, dass das Verkleidungselement 5 aus einer Schichtung aus einem ersten, schmelzedurchlässigen Vlies 1 und einem zweiten, schmelzeundurchlässigen Vlies 2 besteht, wobei diese Schichtung mit dem Kunststoffträger 4 verbunden ausgebildet ist. Die Erfindung bezieht sich außerdem auf ein Verfahren zur Herstellung eines derartigen Innenausstattungsteiles für ein Fahrzeug, beispielsweise eine Zierleiste für die Türinnenverkleidung eines Kraftfahrzeugs.

## Beschreibung

Die Erfindung betrifft ein dekoratives Innenausstattungsteil für ein Fahrzeug, beispielsweise eine Zierleiste für die Türinnenverkleidung eines Kraftfahrzeugs, mit einem Kunststoffträger und einem optische und haptische Eigenschaften aufweisenden Verkleidungselement. Die Erfindung betrifft außerdem ein Verfahren zur Herstellung eines Innenausstattungsteiles für ein Fahrzeug, beispielsweise eine Zierleiste für die Türinnenverkleidung eines Kraftfahrzeugs, durch Verbinden eines Kunststoffträgers mit einem optische und haptische Eigenschaften aufweisenden Verkleidungselement.

### Stand der Technik

Es sind aus dem Stand der Technik mehrere Innenausstattungsteile für Fahrzeuge und Verfahren der gattungsgemäßen Art bekannt, es sei dazu auf folgende Druckschriften verwiesen:

Die DE 42 24 474 A1 bezieht sich auf ein Innenverleidungsteil bspw. ein Kraftfahrzeugteil, ein Schiff, ein Flugzeug oder dgl., mit einem Kunststoffträger und einem eine vorzugsweise porige Strukturierung aufweisenden flächigen Verkleidungselement, vorzugsweise einem Gewebe, Gewirke, Vlies, Leder, Lederersatz oder dgl., das durch Hinterspritzen eines Kunststoffträgers mit diesem unmittelbar verbunden ist, bei teilweiser Durchdringung im Falle der porigen Strukturierung, wobei ein zu dem Kunststoffträger hin abgebogener Randbereich des Verkleidungselementes in einer in dem Kunststoffträger ausgebildeten Nut gefasst ist. Um eine möglichst rationelle Herstellbarkeit bei gleichbleibend guter Qualität zu erreichen, wird hier vorgeschlagen, dass der Randbereich in der Nut beidseitig mit dem Kunststoffträger gleichfalls durch unmittelbares Hinterspritzen verbunden ist.

Die DE 199 35 354 A1 betrifft ein Verkleidungselement, bspw. Innenwandverkleidungsteil eines Kraftfahrzeuges, mit einem im Kunststoffspritzverfahren hergestellten, an einem Weichmaterial durch Hinterspritzen anhaftenden Strukturteil, wobei das Weichmaterial bspw. ein Textilmaterial ist. Um bei rationaler Herstellbarkeit keine Beeinträchtigung des Weichmaterials hervorzurufen, wird hier vorgeschlagen, dass das Strukturteil als Spritzschaumkörper ausgebildet ist.

Es sind die bekannten Anordnungen und Verfahren insbesondere hinsichtlich der optischen und haptischen Eigenschaften verbesserungswürdig.

### Aufgabe

Der Erfindung liegt die Aufgabe zugrunde, ein haptisch und optisch ansprechendes Innenausstattungsteil mit einfachen Mitteln herzustellen.

### Lösung

Die Aufgabe wird bezüglich des Innenausstattungsteiles erfindungsgemäß dadurch gelöst, dass das Verkleidungselement aus einer Schichtung aus einem ersten, schmelzedurchlässigen Vlies und einem zweiten, schmelzeundurchlässigen Vlies besteht, wobei diese Schichtung mit dem Kunststoffträger verbunden ausgebildet ist. Das erste Vlies bewirkt bei diesem erfindungsgemäßen Innenausstattungsteil dabei die optischen und haptischen Eigenschaften. Das zweite Vlies verhindert insbesondere den Durchtritt der Kunststoffschmelze in Richtung des ersten Vlieses.

Bei der bevorzugten Ausführungsform der vorliegenden Erfindung ist die Schichtung von der Seite des zweiten Vlieses her mit dem Kunststoffträger versehen.

Nach einem weiteren Ausgestaltungsmerkmal der vorliegenden Erfindung ist vorgesehen, dass die Schichtung von dem Kunststoffträger hinterspritzt ausgebildet ist, bei einer anderen Ausführungsform kann vorgesehen sein, dass die Schichtung von dem Kunststoffträger hinterpresst ausgebildet ist.

Es empfiehlt sich nach einem weiteren Merkmal der vorliegenden Erfindung, dass der Kunststoffträger aus Polypropylen besteht.

Zweckmäßig ist es nach einem weiteren Ausgestaltungsmerkmal der vorliegenden Erfindung, dass die Schichtung aus dem ersten und zweiten Vlies einen Vliesverbund bildet. Dabei kann die Schichtung aus dem ersten und zweiten Vlies einen durch Klebekaschierung gebildeten Vliesverbund bilden, bei einer anderen Ausführungsform einen durch Flammkaschierung gebildeten Vliesverbund.

Nach einem weiteren Ausgestaltungsmerkmal der vorliegenden Erfindung ist vorgesehen, dass das erste Vlies locker gefilzt ausgebildet ist. Dabei ist zweckmäßig das zweite Vlies durch das erste Vlies hindurch sichtbar ausgebildet, und trägt bei entsprechender farblicher Gestaltung zum optischen Eindruck bei.

Nach einem bezüglich des Innenausstattungsteiles letzten Ausgestaltungsmerkmal der vorliegenden Erfindung ist vorgesehen, dass das erste und/oder das zweite Vlies aus Polyester besteht, für die Fertigung des ersten Vlieses können jedoch auch optisch interessante Naturfasern oder dergleichen eingesetzt werden.

Die Aufgabe wird bezüglich des Verfahrens erfindungsgemäß dadurch gelöst, dass das Verkleidungselement aus einer Schichtung aus einem ersten, schmelzedurchlässigen Vlies und einem zweiten, schmelzeundurchlässigen Vlies erzeugt wird und diese Schichtung anschließend mit dem Kunststoffträger verbunden wird.

Bei der bevorzugten Ausführungsform der vorliegenden Erfindung hinsichtlich des Verfahrens wird die Schichtung von der Seite des zweiten Vlieses her mit dem Kunststoffträger versehen.

Es empfiehlt sich nach einem weiteren Merkmal der vorliegenden Erfindung, dass die Schichtung mit dem Kunststoffträger durch Hinterspritzen verbunden wird, bei einer anderen Ausführungsform kann vorgesehen sein, dass die Schichtung mit dem Kunststoffträger durch Hinterpressen verbunden wird.

Zweckmäßig ist es nach einem weiteren Ausgestaltungsmerkmal der vorliegenden Erfindung, dass die Schichtung aus dem ersten und dem zweiten Vlies vorab zu einem Vliesverbund verarbeitet wird. Dabei kann die Schichtung aus dem ersten und dem zweiten Vlies durch Klebekaschierung vorab zu einem Vliesverbund verarbeitet werden, bei einer anderen Ausführungsform nach einem letzten Ausgestaltungsmerkmal der vorliegenden Erfindung durch Flammkaschierung.

### Figuren

Die Erfindung ist in den Figuren der Zeichnung in einem Ausführungsbeispiel dargestellt. Es zeigen:
- Fig. 1: den vorab erzeugten Vliesverbund aus dem ersten und dem zweiten Vlies des erfindungsgemäßen Innenaustattungsteiles,
- Fig. 2: das fertige Innenausstattungsteil, bei welchem an den Vliesverbund rückseitig ein Kunststoffträger angespritzt ist.

Das erfindungsgemäße dekorative Innenausstattungsteil ist vorgesehen für ein Fahrzeug, und betrifft beispielsweise eine Zierleiste für die Türinnenverkleidung eines Kraftfahrzeugs. Das Innenausstattungsteil weist dabei einen Kunststoffträger 4 und ein optische und haptische Eigenschaften aufweisendes Verkleidungselement 5 auf.

Erfindungsgemäß ist dabei vorgesehen, eine Schichtung aus einem ersten, schmelzedurchlässigen Vlies 1 und einem zweiten, schmelzeundurchlässigen Vlies 2 bereitzustellen und diese dann von der Seite des zweiten Vlieses 2 her mit einem Träger 4 aus Kunststoff zu versehen, insbesondere durch Hinterspritzen oder Hinterpressen mit einer Kunststoffschmelze, beispielsweise aus Polypropylen. Die Schichtung aus dem ersten und zweiten Vlies 1,2 wird vorzugsweise vorab zu einem Vliesverbund 3 verarbeitet, beispielsweise durch Klebe- oder Flammkaschierung.

Das erste, vorzugsweise locker gefilzte Vlies 1 bewirkt bei diesem Innenausstattungsteil die optischen und haptischen Eigenschaften. Das zweite Vlies 2 verhindert insbesondere den Durchtritt der Kunststoffschmelze in Richtung des ersten Vlieses 1, ist jedoch gegebenenfalls noch durch das erste Vlies 1 hindurch sichtbar und trägt bei entsprechender farblicher Gestaltung zum optischen Eindruck bei. Beide Vliese 1,2 bestehen mit Vorteil aus Polyester, für die Fertigung des ersten Vlieses 1 können jedoch auch optisch interessante Naturfasern oder dergleichen eingesetzt werden.

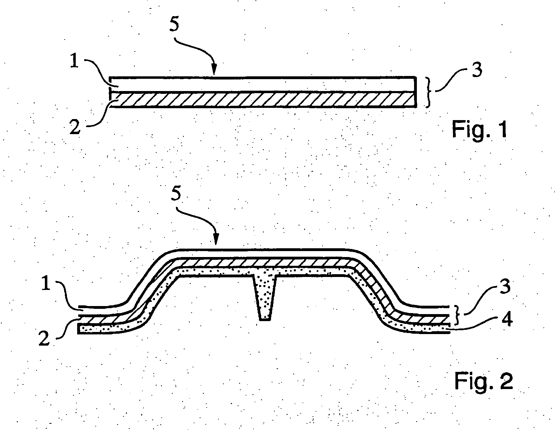

Fig. 1 zeigt dazu beispielhaft den vorab erzeugten Vlisverbund 3 aus dem äußeren dekorativen, lockeren Vlies 1 mit einer ersten Farbe und dem inneren schmelzeundurchlässigen Vlies 2, welches eine zweite Farbe aufweist.

In Fig. 2 ist das fertige Innenausstattungsteil dargestellt, bei welchem an den Vliesverbund 3 rückseitig ein Träger 4 aus Kunststoff angespritzt ist.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich.

### Bezugszeichen

- 1: Vlies (schmelzedurchlässig)
- 2: Vlies (schmelzeundurchlässig)
- 3: Verbund
- 4: Träger
- 5: Verkleidungselement

## Patentansprüche

1. Innenausstattungsteil für ein Fahrzeug, beispielsweise eine Zierleiste für die Türinnenverkleidung eines Kraftfahrzeugs, mit einem Kunststoffträger (4) und einem optische und haptische Eigenschaften aufweisenden Verkleidungselement (5),
**dadurch gekennzeichnet, dass**
das Verkleidungselement (5) aus einer Schichtung aus einem ersten, schmelzedurchlässigen Vlies (1) und einem zweiten, schmelzeundurchlässigen Vlies (2) besteht, wobei diese Schichtung mit dem Kunststoffträger (4) verbunden ausgebildet ist.

2. Innenausstattungsteil nach Anspruch 1,
**dadurch gekennzeichnet, dass**
die Schichtung von der Seite des zweiten Vlieses (2) her mit dem Kunststoffträger (4) versehen ist.

3. Innenausstattungsteil nach Anspruch 1 oder 2,
**dadurch gekennzeichnet, dass**
die Schichtung von dem Kunststoffträger (4) hinterspritzt ausgebildet ist.

4. Innenausstattungsteil nach Anspruch 1 oder 2,
**dadurch gekennzeichnet, dass**
die Schichtung von dem Kunststoffträger (4) hinterpresst ausgebildet ist.

5. Innenausstattungsteil nach einem der Ansprüche 1 bis 4,
**dadurch gekennzeichnet, dass**
der Kunststoffträger (4) aus Polypropylen besteht.

6. Innenausstattungsteil nach einem der Ansprüche 1 bis 5,
**dadurch gekennzeichnet, dass**
die Schichtung aus dem ersten und zweiten Vlies (1,2) einen Vliesverbund (3) bildet.

7. Innenausstattungsteil nach Anspruch 6,
**dadurch gekennzeichnet, dass**
die Schichtung aus dem ersten und zweiten Vlies (1,2) einen durch Klebekaschierung gebildeten Vliesverbund (3) bildet.

8. Innenausstattungsteil nach Anspruch 6,
**dadurch gekennzeichnet, dass**
die Schichtung aus dem ersten und zweiten Vlies (1,2) einen durch Flammkaschierung gebildeten Vliesverbund (3) bildet.

9. Innenausstattungsteil nach einem der Ansprüche 1 bis 8,
**dadurch gekennzeichnet, dass**
das erste Vlies (1) locker gefilzt ausgebildet ist.

10. Innenausstattungsteil nach einem der Ansprüche 1 bis 9,
**dadurch gekennzeichnet, dass**
das zweite Vlies (2) durch das erste Vlies (1) hindurch sichtbar ausgebildet ist.

11. Innenausstattungsteil nach einem der Ansprüche 1 bis 10,
**dadurch gekennzeichnet, dass**
das erste und/oder das zweite Vlies (1,2) aus Polyester besteht.

12. Verfahren zur Herstellung eines Innenausstattungsteiles für ein Fahrzeug, beispielsweise eine Zierleiste für die Türinnenverkleidung eines Kraftfahrzeugs, durch Verbinden eines Kunststoffträgers (4) mit einem optische und haptische Eigenschaften aufweisenden Verkleidungselement (5),
**dadurch gekennzeichnet, dass**
das Verkleidungselement (5) aus einer Schichtung aus einem ersten, schmelzedurchlässigen Vlies (1) und einem zweiten, schmelzeundurchlässigen Vlies (2) erzeugt wird und diese Schichtung anschließend mit dem Kunststoffträger (4) verbunden wird.

13. Verfahren nach Anspruch 12,
**dadurch gekennzeichnet, dass**
die Schichtung von der Seite des zweiten Vlieses (2) her mit dem Kunststoffträger (4) versehen wird.

14. Verfahren nach Anspruch 12 oder 13,
**dadurch gekennzeichnet, dass**
die Schichtung mit dem Kunststoffträger (4) durch Hinterspritzen verbunden wird.

15. Verfahren nach Anspruch 12 oder 13,
**dadurch gekennzeichnet, dass**
die Schichtung mit dem Kunststoffträger (4) durch Hinterpressen verbunden wird.

16. Verfahren nach einem der Ansprüche 12 bis 15,
**dadurch gekennzeichnet, dass**
die Schichtung aus dem ersten und dem zweiten Vlies (1,2) vorab zu einem Vliesverbund (3) verarbeitet wird.

17. Verfahren nach Anspruch 16,
**dadurch gekennzeichnet, dass**
die Schichtung aus dem ersten und dem zweiten Vlies (1,2) durch Klebekaschierung vorab zu einem Vliesverbund (3) verarbeitet wird.

18. Verfahren nach Anspruch 16,
**dadurch gekennzeichnet, dass**
die Schichtung aus dem ersten und dem zweiten Vlies (1,2) durch Flammkaschierung vorab zu einem Vliesverbund (3) verarbeitet wird.
